# EUROPEAN PATENT SPECIFICATION

(11) **EP 4 602 524 B1**
(45) Date of publication and mention of the grant of the patent: **04.11.2026**
(21) Application number: 23801123.3
(22) Date of filing: 06.10.2023
(51) Int. Cl.: G06N 3/084, G06N 3/088

(54) **DETECTION TRANSFORMER (DETR) BACK PROPAGATION USING GLOBAL LOSS FUNCTION EXPRESSED AS SUM OF ASSIGNMENT-INDEPENDENT TERM AND ASSIGNMENT-DEPENDENT TERM DEFINED BY ASSIGNMENT COST MATRIX**
DETEKTIONSTRANSFORMATOR (DETR)-RÜCKAUSBREITUNG UNTER VERWENDUNG EINER GLOBALEN VERLUSTFUNKTION ALS SUMME VON ZUWEISUNGSUNABHÄNGIGEM BEGRIFF UND ZUWEISUNGSABHÄNGIGEM BEGRIFF DEFINIERT DURCH ZUWEISUNGSKOSTENMATRIX
PROPAGATION DE RETOUR DE TRANSFORMATEUR DE DÉTECTION (DETR) À L'AIDE D'UNE FONCTION DE PERTE GLOBALE EXPRIMÉE EN TANT QUE SOMME DE TERME INDÉPENDANT DE L'ATTRIBUTION ET TERME DÉPENDANT DE L'ATTRIBUTION DÉFINI PAR UNE MATRICE DE COÛT D'ATTRIBUTION

(30) Priority: 14.10.2022 US 202263416481 P; 11.11.2022 US 202263424831 P
(43) Date of publication of application: 20.08.2025
(73) Proprietor: Motional AD LLC, Boston, MA 02210 (US)
(72) Inventor: CHEN, Lingji, Boston, Massachusetts 02210 (US); SHARMA, Alok, Boston, Massachusetts 02210 (US); SHIRORE, Chinmay Purushottam, Boston, Massachusetts 02210 (US); ZHANG, Chengjie, Boston, Massachusetts 02210 (US); BUDDHARAJU, Balarama Raju, Boston, Massachusetts 02210 (US)
(74) Representative: Fish & Richardson P.C.
(86) International application number: PCT/US2023/034703
(87) International publication number: WO 2024/081172

(56) References cited:
- NICOLAS CARION ET AL: "End-to-End Object Detection with Transformers", ARXIV.ORG, CORNELL UNIVERSITY LIBRARY, 201 OLIN LIBRARY CORNELL UNIVERSITY ITHACA, NY 14853, 28 May 2020 (2020-05-28), XP081683915
- XI GAO ET AL: "Differentiable Combinatorial Losses through Generalized Gradients of Linear Programs", ARXIV.ORG, CORNELL UNIVERSITY LIBRARY, 201 OLIN LIBRARY CORNELL UNIVERSITY ITHACA, NY 14853, 18 October 2019 (2019-10-18), XP081611535
- LINGJI CHEN ET AL: "How to Backpropagate through Hungarian in Your DETR?", ARXIV.ORG, CORNELL UNIVERSITY LIBRARY, 201 OLIN LIBRARY CORNELL UNIVERSITY ITHACA, NY 14853, 12 November 2022 (2022-11-12), XP091379083

## Description

### CROSS-REFERENCE TO RELATED APPLICATIONS

This application claims priority under 35 USC §119(e) to U.S. Provisional Patent Application Serial No. 63/416,481, filed on October 14, 2022, and U.S. Provisional Patent Application Serial No. 63/424,831, filed on November 11, 2022.

### BACKGROUND

The DEtection TRansformer (DETR), together with its later variants such as Deformable DETR, has become a building block for many transformer-based approaches to object detection and tracking for autonomous vehicles and other applications. DETR uses a transformer encoder-decoder architecture and a set-based global loss that forces unique predictions using bipartite matching. In the traditional DETR approach the assignment cost and the global loss are not aligned, i.e., reducing the former is likely but not guaranteed to reduce the latter. Additionally, the issue of gradient is ignored when a combinatorial solver such as Hungarian is used.

NICOLAS CARION ET AL: "End-to-End Object Detection with Transformers", ARXIV.ORG, CORNELL UNIVERSITY LIBRARY, 201 OLIN LIBRARY CORNELL UNIVERSITY ITHACA, NY 14853, 28 May 2020 describes a DETR that formulates object detection as direct set prediction using a transformer encoder-decoder with bipartite Hungarian matching.

XI GAO ET AL: "Differentiable Combinatorial Losses through Generalized Gradients of Linear Programs", ARXIV.ORG, CORNELL UNIVERSITY LIBRARY, 201 OLIN LIBRARY CORNELL UNIVERSITY ITHACA, NY 14853, 18 October 2019 describes a method for differentiating the optimal objective value of combinatorial optimization problems by computing generalized gradients of equivalent linear programs using a single run of a black-box solver.

### BRIEF DESCRIPTION OF THE FIGURES

FIG. 1 is an example environment in which a vehicle including one or more components of an autonomous system can be implemented;
FIG. 2 is a diagram of one or more systems of a vehicle including an autonomous system;
FIG. 3 is a diagram of components of one or more devices and/or one or more systems of FIGS. 1 and 2;
FIG. 4A is a diagram of certain components of an autonomous system;
FIG. 4B is a diagram of an implementation of a neural network;
FIG. 4C and 4D are a diagram illustrating example operation of a CNN;
FIG. 5 is block diagram of a DETR transformer architecture; and
FIG. 6 is a flow diagram of a DETR transformer process.

### DETAILED DESCRIPTION

The invention is defined by the appended claims. In the following description numerous specific details are set forth in order to provide a thorough understanding of the present disclosure for the purposes of explanation. It will be apparent, however, that the embodiments described by the present disclosure can be practiced without these specific details. In some instances, well-known structures and devices are illustrated in block diagram form in order to avoid unnecessarily obscuring aspects of the present disclosure.

Specific arrangements or orderings of schematic elements, such as those representing systems, devices, modules, instruction blocks, data elements, and/or the like are illustrated in the drawings for ease of description. However, it will be understood by those skilled in the art that the specific ordering or arrangement of the schematic elements in the drawings is not meant to imply that a particular order or sequence of processing, or separation of processes, is required unless explicitly described as such. Further, the inclusion of a schematic element in a drawing is not meant to imply that such element is required in all embodiments or that the features represented by such element may not be included in or combined with other elements in some embodiments unless explicitly described as such.

Further, where connecting elements such as solid or dashed lines or arrows are used in the drawings to illustrate a connection, relationship, or association between or among two or more other schematic elements, the absence of any such connecting elements is not meant to imply that no connection, relationship, or association can exist. In other words, some connections, relationships, or associations between elements are not illustrated in the drawings so as not to obscure the disclosure. In addition, for ease of illustration, a single connecting element can be used to represent multiple connections, relationships or associations between elements. For example, where a connecting element represents communication of signals, data, or instructions (e.g., "software instructions"), it should be understood by those skilled in the art that such element can represent one or multiple signal paths (e.g., a bus), as may be needed, to affect the communication.

Although the terms first, second, third, and/or the like are used to describe various elements, these elements should not be limited by these terms. The terms first, second, third, and/or the like are used only to distinguish one element from another. For example, a first contact could be termed a second contact and, similarly, a second contact could be termed a first contact without departing from the scope of the described embodiments. The first contact and the second contact are both contacts, but they are not the same contact.

The terminology used in the description of the various described embodiments herein is included for the purpose of describing particular embodiments only and is not intended to be limiting. As used in the description of the various described embodiments and the appended claims, the singular forms "a," "an" and "the" are intended to include the plural forms as well and can be used interchangeably with "one or more" or "at least one," unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description specify the presence of stated features, integers, steps, operations, elements, and/or components, but do not preclude the presence or addition of one or more other features, integers, steps, operations, elements, components, and/or groups thereof.

As used herein, the terms "communication" and "communicate" refer to at least one of the reception, receipt, transmission, transfer, provision, and/or the like of information (or information represented by, for example, data, signals, messages, instructions, commands, and/or the like). For one unit (e.g., a device, a system, a component of a device or system, combinations thereof, and/or the like) to be in communication with another unit means that the one unit is able to directly or indirectly receive information from and/or send (e.g., transmit) information to the other unit. This may refer to a direct or indirect connection that is wired and/or wireless in nature. Additionally, two units may be in communication with each other even though the information transmitted may be modified, processed, relayed, and/or routed between the first and second unit. For example, a first unit may be in communication with a second unit even though the first unit passively receives information and does not actively transmit information to the second unit. As another example, a first unit may be in communication with a second unit if at least one intermediary unit (e.g., a third unit located between the first unit and the second unit) processes information received from the first unit and transmits the processed information to the second unit. In some embodiments, a message may refer to a network packet (e.g., a data packet and/or the like) that includes data.

As used herein, the term "if" is, optionally, construed to mean "when", "upon", "in response to determining," "in response to detecting," and/or the like, depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," and/or the like, depending on the context. Also, as used herein, the terms "has", "have", "having", or the like are intended to be open-ended terms. Further, the phrase "based on" is intended to mean "based at least partially on" unless explicitly stated otherwise.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments can be practiced without these specific details. In other instances, well-known methods, procedures, components, circuits, and networks have not been described in detail so as not to unnecessarily obscure aspects of the embodiments.

### General Overview

Autonomous vehicles rely on the perception of their surroundings to ensure safe and robust driving performance. This perception includes the ability to detect and track multiple objects simultaneously. One technique for perception is DETR, which uses transformers and bipartite matching loss for direct set prediction. DETR was first described in Nicolas Carion, Francisco Massa, Gabriel Synnaeve, Nicolas Usunier, Alexander Kirillov, and Sergey Zagoruyko. End-to-end object detection with transformers. volume 12346 LNCS, pages 213-229. Springer Science and Business Media Deutschland GmbH, 2020 (hereinafter referred to as the "seminal paper").

In the seminal paper, the network produces a set of predictions whose number is larger than the number of ground truth boxes. An assignment problem is defined and solved by a Hungarian solver, and optimally matched boxes are used to define a global loss to be minimized through backpropagation. The global loss accounts for three aspects of the prediction: (1) the classes of the matched boxes should be those of their assigned ground truth; (2) the positions and sizes of these boxes should be their assigned ground truth; and (3) the classes of the non-matched boxes should be background.

Intuitively, the criterion according to which the matching is made, i.e., the total assignment cost, should be aligned with the global loss, such that reducing the former necessarily reduces the latter. But this is not the case because the matching cost is defined differently from the global loss. The terms accounting for classes use raw probability instead of cross entropy. The heuristic reason given is relative scale to the loss from geometry. One may argue that the scaling problem is the same as in the loss, and can be explicitly dealt with using an additional scaling hyperparameter. The above terms are also limited to only the matched boxes. The reason given is a wrong one, because each prediction has a different probability of being background and therefore the missing sum is not matching-independent.

In a larger context, the Hungarian solver may be viewed as just another module performing some operations, in this case, some discrete optimization. One may argue that it does not matter how the cost matrix is defined, as long as the gradient can be accounted for properly. Unfortunately this is not done in most DETR approaches. In the code released with the seminal paper, the issue of gradient is ignored by surrounding the matcher code with torch.no grad(), i.e., gradient tracing is turned off when the Hungarian solver is involved.

The disclosed embodiments provide an alternative and simpler approach. First, the global loss is expressed as a sum of two terms: a first term is defined by the probabilities of being background of all predictions, regardless of matching. The second term is treated as the optimal cost of matching, if the cost matrix is suitably defined.

Thus, to perform backpropagation on the global loss, one only needs to determine what the gradient of the optimal cost is with respect to the parameters defining the assignment problem. Fortunately this can be determined using Integer Linear Programming (ILP), as described in Xi Gao, Han Zhang, Aliakbar Panahi, and Tom Arodz. Combinatorial losses through generalized gradients of integer linear programs. arXiv preprint arXiv:1910.08211, 2019.

By virtue of the embodiments described herein, the disclosed systems and methods improve the speed and accuracy of training DETR detectors over conventional training formulations of DETR.

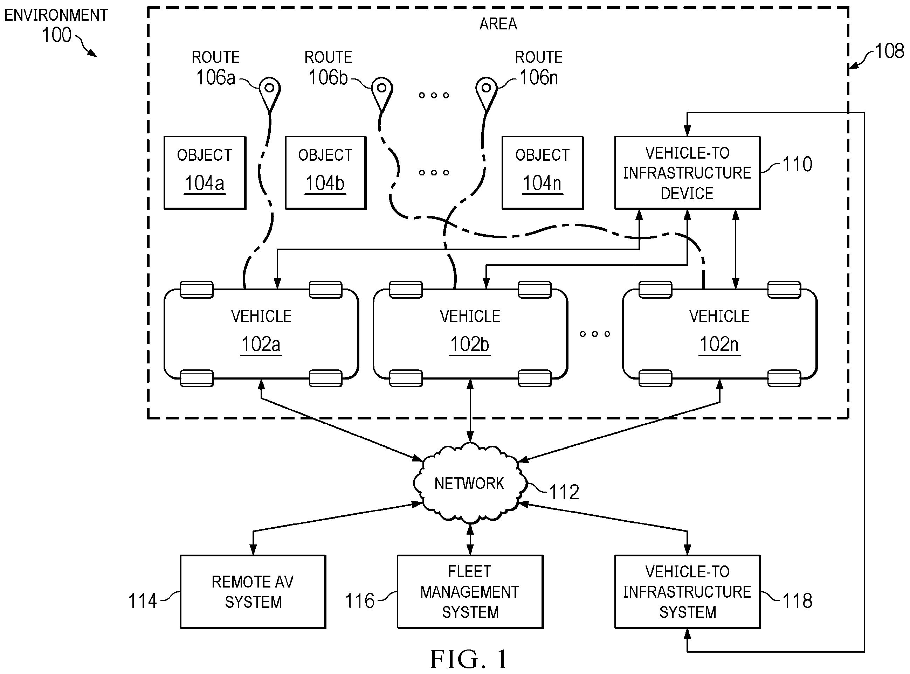

Referring now to FIG. 1, illustrated is example environment 100 in which vehicles that include autonomous systems, as well as vehicles that do not, are operated. As illustrated, environment 100 includes vehicles 102a-102n, objects 104a-104n, routes 106a-106n, area 108, vehicle-to-infrastructure (V2I) device 110, network 112, remote autonomous vehicle (AV) system 114, fleet management system 116, and V2I system 118. Vehicles 102a-102n, vehicle-to-infrastructure (V2I) device 110, network 112, autonomous vehicle (AV) system 114, fleet management system 116, and V2I system 118 interconnect (e.g., establish a connection to communicate and/or the like) via wired connections, wireless connections, or a combination of wired or wireless connections. In some embodiments, objects 104a-104n interconnect with at least one of vehicles 102a-102n, vehicle-to-infrastructure (V2I) device 110, network 112, autonomous vehicle (AV) system 114, fleet management system 116, and V2I system 118 via wired connections, wireless connections, or a combination of wired or wireless connections.

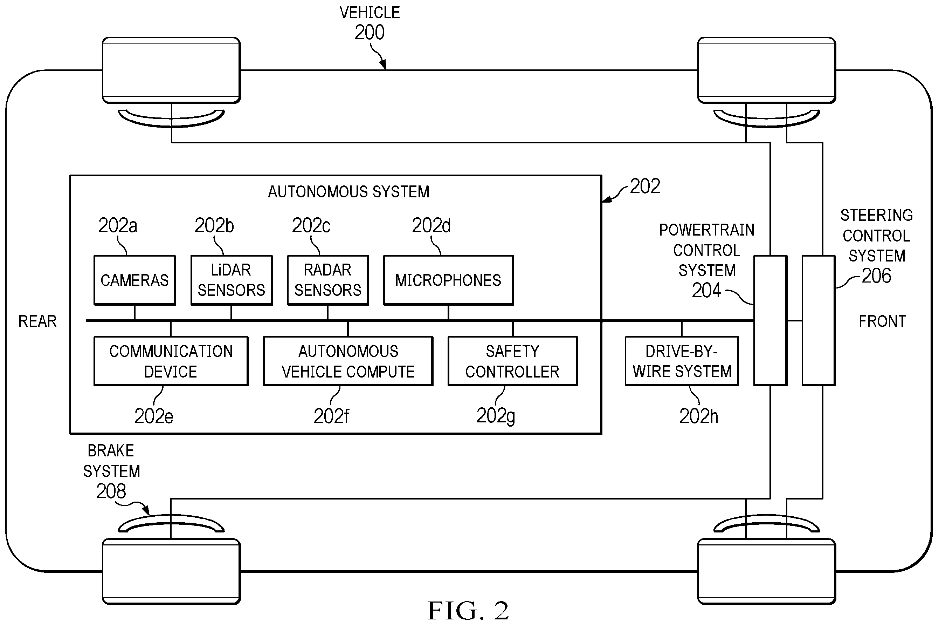

Vehicles 102a-102n (referred to individually as vehicle 102 and collectively as vehicles 102) include at least one device configured to transport goods and/or people. In some embodiments, vehicles 102 are configured to be in communication with V2I device 110, remote AV system 114, fleet management system 116, and/or V2I system 118 via network 112. In some embodiments, vehicles 102 include cars, buses, trucks, trains, and/or the like. In some embodiments, vehicles 102 are the same as, or similar to, vehicles 200, described herein (see FIG. 2). In some embodiments, a vehicle 200 of a set of vehicles 200 is associated with an autonomous fleet manager. In some embodiments, vehicles 102 travel along respective routes 106a-106n (referred to individually as route 106 and collectively as routes 106), as described herein. In some embodiments, one or more vehicles 102 include an autonomous system (e.g., an autonomous system that is the same as or similar to autonomous system 202).

Objects 104a-104n (referred to individually as object 104 and collectively as objects 104) include, for example, at least one vehicle, at least one pedestrian, at least one cyclist, at least one structure (e.g., a building, a sign, a fire hydrant, etc.), and/or the like. Each object 104 is stationary (e.g., located at a fixed location for a period of time) or mobile (e.g., having a velocity and associated with at least one trajectory). In some embodiments, objects 104 are associated with corresponding locations in area 108.

Routes 106a-106n (referred to individually as route 106 and collectively as routes 106) are each associated with (e.g., prescribe) a sequence of actions (also known as a trajectory) connecting states along which an AV can navigate. Each route 106 starts at an initial state (e.g., a state that corresponds to a first spatiotemporal location, velocity, and/or the like) and ends at a final goal state (e.g., a state that corresponds to a second spatiotemporal location that is different from the first spatiotemporal location) or goal region (e.g. a subspace of acceptable states (e.g., terminal states)). In some embodiments, the first state includes a location at which an individual or individuals are to be picked-up by the AV and the second state or region includes a location or locations at which the individual or individuals picked-up by the AV are to be dropped-off. In some embodiments, routes 106 include a plurality of acceptable state sequences (e.g., a plurality of spatiotemporal location sequences), the plurality of state sequences associated with (e.g., defining) a plurality of trajectories. In an example, routes 106 include only high level actions or imprecise state locations, such as a series of connected roads dictating turning directions at roadway intersections. Additionally, or alternatively, routes 106 may include more precise actions or states such as, for example, specific target lanes or precise locations within the lane areas and targeted speed at those positions. In an example, routes 106 include a plurality of precise state sequences along the at least one high level action sequence with a limited lookahead horizon to reach intermediate goals, where the combination of successive iterations of limited horizon state sequences cumulatively correspond to a plurality of trajectories that collectively form the high level route to terminate at the final goal state or region.

Area 108 includes a physical area (e.g., a geographic region) within which vehicles 102 can navigate. In an example, area 108 includes at least one state (e.g., a country, a province, an individual state of a plurality of states included in a country, etc.), at least one portion of a state, at least one city, at least one portion of a city, etc. In some embodiments, area 108 includes at least one named thoroughfare (referred to herein as a "road") such as a highway, an interstate highway, a parkway, a city street, etc. Additionally, or alternatively, in some examples area 108 includes at least one unnamed road such as a driveway, a section of a parking lot, a section of a vacant and/or undeveloped lot, a dirt path, etc. In some embodiments, a road includes at least one lane (e.g., a portion of the road that can be traversed by vehicles 102). In an example, a road includes at least one lane associated with (e.g., identified based on) at least one lane marking.

Vehicle-to-Infrastructure (V2I) device 110 (sometimes referred to as a Vehicle-to-Infrastructure or Vehicle-to-Everything (V2X) device) includes at least one device configured to be in communication with vehicles 102 and/or V2I infrastructure system 118. In some embodiments, V2I device 110 is configured to be in communication with vehicles 102, remote AV system 114, fleet management system 116, and/or V2I system 118 via network 112. In some embodiments, V2I device 110 includes a radio frequency identification (RFID) device, signage, cameras (e.g., two-dimensional (2D) and/or three-dimensional (3D) cameras), lane markers, streetlights, parking meters, etc. In some embodiments, V2I device 110 is configured to communicate directly with vehicles 102. Additionally, or alternatively, in some embodiments V2I device 110 is configured to communicate with vehicles 102, remote AV system 114, and/or fleet management system 116 via V2I system 118. In some embodiments, V2I device 110 is configured to communicate with V2I system 118 via network 112.

Network 112 includes one or more wired and/or wireless networks. In an example, network 112 includes a cellular network (e.g., a long term evolution (LTE) network, a third generation (3G) network, a fourth generation (4G) network, a fifth generation (5G) network, a code division multiple access (CDMA) network, etc.), a public land mobile network (PLMN), a local area network (LAN), a wide area network (WAN), a metropolitan area network (MAN), a telephone network (e.g., the public switched telephone network (PSTN), a private network, an ad hoc network, an intranet, the Internet, a fiber optic-based network, a cloud computing network, etc., a combination of some or all of these networks, and/or the like.

Remote AV system 114 includes at least one device configured to be in communication with vehicles 102, V2I device 110, network 112, fleet management system 116, and/or V2I system 118 via network 112. In an example, remote AV system 114 includes a server, a group of servers, and/or other like devices. In some embodiments, remote AV system 114 is co-located with the fleet management system 116. In some embodiments, remote AV system 114 is involved in the installation of some or all of the components of a vehicle, including an autonomous system, an autonomous vehicle compute, software implemented by an autonomous vehicle compute, and/or the like. In some embodiments, remote AV system 114 maintains (e.g., updates and/or replaces) such components and/or software during the lifetime of the vehicle.

Fleet management system 116 includes at least one device configured to be in communication with vehicles 102, V2I device 110, remote AV system 114, and/or V2I infrastructure system 118. In an example, fleet management system 116 includes a server, a group of servers, and/or other like devices. In some embodiments, fleet management system 116 is associated with a ridesharing company (e.g., an organization that controls operation of multiple vehicles (e.g., vehicles that include autonomous systems and/or vehicles that do not include autonomous systems) and/or the like).

In some embodiments, V2I system 118 includes at least one device configured to be in communication with vehicles 102, V2I device 110, remote AV system 114, and/or fleet management system 116 via network 112. In some examples, V2I system 118 is configured to be in communication with V2I device 110 via a connection different from network 112. In some embodiments, V2I system 118 includes a server, a group of servers, and/or other like devices. In some embodiments, V2I system 118 is associated with a municipality or a private institution (e.g., a private institution that maintains V2I device 110 and/or the like).

The number and arrangement of elements illustrated in FIG. 1 are provided as an example. There can be additional elements, fewer elements, different elements, and/or differently arranged elements, than those illustrated in FIG. 1. Additionally, or alternatively, at least one element of environment 100 can perform one or more functions described as being performed by at least one different element of FIG. 1. Additionally, or alternatively, at least one set of elements of environment 100 can perform one or more functions described as being performed by at least one different set of elements of environment 100.

Referring now to FIG. 2, vehicle 200 (which may be the same as, or similar to vehicles 102 of FIG. 1) includes or is associated with autonomous system 202, powertrain control system 204, steering control system 206, and brake system 208. In some embodiments, vehicle 200 is the same as or similar to vehicle 102 (*see* FIG. 1). In some embodiments, autonomous system 202 is configured to confer vehicle 200 autonomous driving capability (e.g., implement at least one driving automation or maneuver-based function, feature, device, and/or the like that enable vehicle 200 to be partially or fully operated without human intervention including, without limitation, fully autonomous vehicles (e.g., vehicles that forego reliance on human intervention such as Level 5 ADS-operated vehicles), highly autonomous vehicles (e.g., vehicles that forego reliance on human intervention in certain situations such as Level 4 ADS-operated vehicles), conditional autonomous vehicles (e.g., vehicles that forego reliance on human intervention in limited situations such as Level 3 ADS-operated vehicles) and/or the like. In one embodiment, autonomous system 202 includes operational or tactical functionality required to operate vehicle 200 in on-road traffic and perform part or all of Dynamic Driving Task (DDT) on a sustained basis. In another embodiment, autonomous system 202 includes an Advanced Driver Assistance System (ADAS) that includes driver support features. Autonomous system 202 supports various levels of driving automation, ranging from no driving automation (e.g., Level 0) to full driving automation (e.g., Level 5). For a detailed description of fully autonomous vehicles and highly autonomous vehicles, reference may be made to SAE International's standard J3016: Taxonomy and Definitions for Terms Related to On-Road Motor Vehicle Automated Driving Systems. In some embodiments, vehicle 200 is associated with an autonomous fleet manager and/or a ridesharing company.

Autonomous system 202 includes a sensor suite that includes one or more devices such as cameras 202a, LiDAR sensors 202b, radar sensors 202c, and microphones 202d. In some embodiments, autonomous system 202 can include more or fewer devices and/or different devices (e.g., ultrasonic sensors, inertial sensors, GPS receivers (discussed below), odometry sensors that generate data associated with an indication of a distance that vehicle 200 has traveled, and/or the like). In some embodiments, autonomous system 202 uses the one or more devices included in autonomous system 202 to generate data associated with environment 100, described herein. The data generated by the one or more devices of autonomous system 202 can be used by one or more systems described herein to observe the environment (e.g., environment 100) in which vehicle 200 is located. In some embodiments, autonomous system 202 includes communication device 202e, autonomous vehicle compute 202f, drive-by-wire (DBW) system 202h, and safety controller 202g.

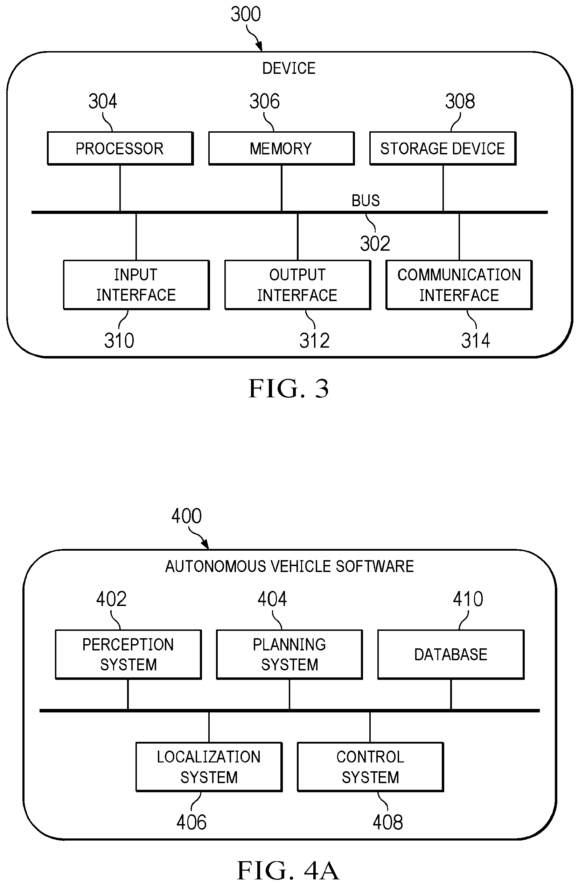

Cameras 202a include at least one device configured to be in communication with communication device 202e, autonomous vehicle compute 202f, and/or safety controller 202g via a bus (e.g., a bus that is the same as or similar to bus 302 of FIG. 3). Cameras 202a include at least one camera (e.g., a digital camera using a light sensor such as a Charge-Coupled Device (CCD), a thermal camera, an infrared (IR) camera, an event camera, and/or the like) to capture images including physical objects (e.g., cars, buses, curbs, people, and/or the like). In some embodiments, camera 202a generates camera data as output. In some examples, camera 202a generates camera data that includes image data associated with an image. In this example, the image data may specify at least one parameter (e.g., image characteristics such as exposure, brightness, etc., an image timestamp, and/or the like) corresponding to the image. In such an example, the image may be in a format (e.g., RAW, JPEG, PNG, and/or the like). In some embodiments, camera 202a includes a plurality of independent cameras configured on (e.g., positioned on) a vehicle to capture images for the purpose of stereopsis (stereo vision). In some examples, camera 202a includes a plurality of cameras that generate image data and transmit the image data to autonomous vehicle compute 202f and/or a fleet management system (e.g., a fleet management system that is the same as or similar to fleet management system 116 of FIG. 1). In such an example, autonomous vehicle compute 202f determines depth to one or more objects in a field of view of at least two cameras of the plurality of cameras based on the image data from the at least two cameras. In some embodiments, cameras 202a is configured to capture images of objects within a distance from cameras 202a (e.g., up to 100 meters, up to a kilometer, and/or the like). Accordingly, cameras 202a include features such as sensors and lenses that are optimized for perceiving objects that are at one or more distances from cameras 202a.

In an embodiment, camera 202a includes at least one camera configured to capture one or more images associated with one or more traffic lights, street signs and/or other physical objects that provide visual navigation information. In some embodiments, camera 202a generates traffic light data associated with one or more images. In some examples, camera 202a generates TLD (Traffic Light Detection) data associated with one or more images that include a format (e.g., RAW, JPEG, PNG, and/or the like). In some embodiments, camera 202a that generates TLD data differs from other systems described herein incorporating cameras in that camera 202a can include one or more cameras with a wide field of view (e.g., a wide-angle lens, a fish-eye lens, a lens having a viewing angle of approximately 120 degrees or more, and/or the like) to generate images about as many physical objects as possible.

Light Detection and Ranging (LiDAR) sensors 202b include at least one device configured to be in communication with communication device 202e, autonomous vehicle compute 202f, and/or safety controller 202g via a bus (e.g., a bus that is the same as or similar to bus 302 of FIG. 3). LiDAR sensors 202b include a system configured to transmit light from a light emitter (e.g., a laser transmitter). Light emitted by LiDAR sensors 202b include light (e.g., infrared light and/or the like) that is outside of the visible spectrum. In some embodiments, during operation, light emitted by LiDAR sensors 202b encounters a physical object (e.g., a vehicle) and is reflected back to LiDAR sensors 202b. In some embodiments, the light emitted by LiDAR sensors 202b does not penetrate the physical objects that the light encounters. LiDAR sensors 202b also include at least one light detector which detects the light that was emitted from the light emitter after the light encounters a physical object. In some embodiments, at least one data processing system associated with LiDAR sensors 202b generates an image (e.g., a point cloud, a combined point cloud, and/or the like) representing the objects included in a field of view of LiDAR sensors 202b. In some examples, the at least one data processing system associated with LiDAR sensor 202b generates an image that represents the boundaries of a physical object, the surfaces (e.g., the topology of the surfaces) of the physical object, and/or the like. In such an example, the image is used to determine the boundaries of physical objects in the field of view of LiDAR sensors 202b.

Radio Detection and Ranging (radar) sensors 202c include at least one device configured to be in communication with communication device 202e, autonomous vehicle compute 202f, and/or safety controller 202g via a bus (e.g., a bus that is the same as or similar to bus 302 of FIG. 3). Radar sensors 202c include a system configured to transmit radio waves (either pulsed or continuously). The radio waves transmitted by radar sensors 202c include radio waves that are within a predetermined spectrum In some embodiments, during operation, radio waves transmitted by radar sensors 202c encounter a physical object and are reflected back to radar sensors 202c. In some embodiments, the radio waves transmitted by radar sensors 202c are not reflected by some objects. In some embodiments, at least one data processing system associated with radar sensors 202c generates signals representing the objects included in a field of view of radar sensors 202c. For example, the at least one data processing system associated with radar sensor 202c generates an image that represents the boundaries of a physical object, the surfaces (e.g., the topology of the surfaces) of the physical object, and/or the like. In some examples, the image is used to determine the boundaries of physical objects in the field of view of radar sensors 202c.

Microphones 202d includes at least one device configured to be in communication with communication device 202e, autonomous vehicle compute 202f, and/or safety controller 202g via a bus (e.g., a bus that is the same as or similar to bus 302 of FIG. 3). Microphones 202d include one or more microphones (e.g., array microphones, external microphones, and/or the like) that capture audio signals and generate data associated with (e.g., representing) the audio signals. In some examples, microphones 202d include transducer devices and/or like devices. In some embodiments, one or more systems described herein can receive the data generated by microphones 202d and determine a position of an object relative to vehicle 200 (e.g., a distance and/or the like) based on the audio signals associated with the data.

Communication device 202e includes at least one device configured to be in communication with cameras 202a, LiDAR sensors 202b, radar sensors 202c, microphones 202d, autonomous vehicle compute 202f, safety controller 202g, and/or DBW (Drive-By-Wire) system 202h. For example, communication device 202e may include a device that is the same as or similar to communication interface 314 of FIG. 3. In some embodiments, communication device 202e includes a vehicle-to-vehicle (V2V) communication device (e.g., a device that enables wireless communication of data between vehicles).

Autonomous vehicle compute 202f include at least one device configured to be in communication with cameras 202a, LiDAR sensors 202b, radar sensors 202c, microphones 202d, communication device 202e, safety controller 202g, and/or DBW system 202h. In some examples, autonomous vehicle compute 202f includes a device such as a client device, a mobile device (e.g., a cellular telephone, a tablet, and/or the like), a server (e.g., a computing device including one or more central processing units, graphical processing units, and/or the like), and/or the like. In some embodiments, autonomous vehicle compute 202f is configured to implement autonomous vehicle software 400, described herein. In an embodiment, autonomous vehicle compute 202 f is the same or similar to DETR architecture 500, described here. Additionally, or alternatively, in some embodiments autonomous vehicle compute 202f is configured to be in communication with an autonomous vehicle system (e.g., an autonomous vehicle system that is the same as or similar to remote AV system 114 of FIG. 1), a fleet management system (e.g., a fleet management system that is the same as or similar to fleet management system 116 of FIG. 1), a V2I device (e.g., a V2I device that is the same as or similar to V2I device 110 of FIG. 1), and/or a V2I system (e.g., a V2I system that is the same as or similar to V2I system 118 of FIG. 1).

Safety controller 202g includes at least one device configured to be in communication with cameras 202a, LiDAR sensors 202b, radar sensors 202c, microphones 202d, communication device 202e, autonomous vehicle computer 202f, and/or DBW system 202h. In some examples, safety controller 202g includes one or more controllers (electrical controllers, electromechanical controllers, and/or the like) that are configured to generate and/or transmit control signals to operate one or more devices of vehicle 200 (e.g., powertrain control system 204, steering control system 206, brake system 208, and/or the like). In some embodiments, safety controller 202g is configured to generate control signals that take precedence over (e.g., overrides) control signals generated and/or transmitted by autonomous vehicle compute 202f.

DBW system 202h includes at least one device configured to be in communication with communication device 202e and/or autonomous vehicle compute 202f. In some examples, DBW system 202h includes one or more controllers (e.g., electrical controllers, electromechanical controllers, and/or the like) that are configured to generate and/or transmit control signals to operate one or more devices of vehicle 200 (e.g., powertrain control system 204, steering control system 206, brake system 208, and/or the like). Additionally, or alternatively, the one or more controllers of DBW system 202h are configured to generate and/or transmit control signals to operate at least one different device (e.g., a turn signal, headlights, door locks, windshield wipers, and/or the like) of vehicle 200.

Powertrain control system 204 includes at least one device configured to be in communication with DBW system 202h. In some examples, powertrain control system 204 includes at least one controller, actuator, and/or the like. In some embodiments, powertrain control system 204 receives control signals from DBW system 202h and powertrain control system 204 causes vehicle 200 to make longitudinal vehicle motion, such as start moving forward, stop moving forward, start moving backward, stop moving backward, accelerate in a direction, decelerate in a direction or to make lateral vehicle motion such as performing a left turn, performing a right turn, and/or the like. In an example, powertrain control system 204 causes the energy (e.g., fuel, electricity, and/or the like) provided to a motor of the vehicle to increase, remain the same, or decrease, thereby causing at least one wheel of vehicle 200 to rotate or not rotate.

Steering control system 206 includes at least one device configured to rotate one or more wheels of vehicle 200. In some examples, steering control system 206 includes at least one controller, actuator, and/or the like. In some embodiments, steering control system 206 causes the front two wheels and/or the rear two wheels of vehicle 200 to rotate to the left or right to cause vehicle 200 to turn to the left or right. In other words, steering control system 206 causes activities necessary for the regulation of the y-axis component of vehicle motion.

Brake system 208 includes at least one device configured to actuate one or more brakes to cause vehicle 200 to reduce speed and/or remain stationary. In some examples, brake system 208 includes at least one controller and/or actuator that is configured to cause one or more calipers associated with one or more wheels of vehicle 200 to close on a corresponding rotor of vehicle 200. Additionally, or alternatively, in some examples brake system 208 includes an automatic emergency braking (AEB) system, a regenerative braking system, and/or the like.

In some embodiments, vehicle 200 includes at least one platform sensor (not explicitly illustrated) that measures or infers properties of a state or a condition of vehicle 200. In some examples, vehicle 200 includes platform sensors such as a global positioning system (GPS) receiver, an inertial measurement unit (IMU), a wheel speed sensor, a wheel brake pressure sensor, a wheel torque sensor, an engine torque sensor, a steering angle sensor, and/or the like. Although brake system 208 is illustrated to be located in the near side of vehicle 200 in FIG. 2, brake system 208 may be located anywhere in vehicle 200.

Referring now to FIG. 3, illustrated is a schematic diagram of a device 300. As illustrated, device 300 includes processor 304, memory 306, storage component 308, input interface 310, output interface 312, communication interface 314, and bus 302. In some embodiments, device 300 corresponds to at least one device of vehicles 102 (e.g., at least one device of a system of vehicles 102) and/or one or more devices of network 112 (e.g., one or more devices of a system of network 112). In some embodiments, one or more devices of vehicles 102 (e.g., one or more devices of a system of vehicles 102) and/or one or more devices of network 112 (e.g., one or more devices of a system of network 112) include at least one device 300 and/or at least one component of device 300. As shown in FIG. 3, device 300 includes bus 302, processor 304, memory 306, storage component 308, input interface 310, output interface 312, and communication interface 314.

Bus 302 includes a component that permits communication among the components of device 300. In some cases, processor 304 includes a processor (e.g., a central processing unit (CPU), a graphics processing unit (GPU), an accelerated processing unit (APU), a neural processing unit (NPU) and/or the like), a digital signal processor (DSP), and/or any processing component (e.g., a field-programmable gate array (FPGA), an application specific integrated circuit (ASIC), and/or the like) that can be programmed to perform at least one function. Memory 306 includes random access memory (RAM), read-only memory (ROM), and/or another type of dynamic and/or static storage device (e.g., flash memory, magnetic memory, optical memory, dynamic RAM (DRAM), and/or the like) that stores data and/or instructions for use by processor 304.

Storage component 308 stores data and/or software related to the operation and use of device 300. In some examples, storage component 308 includes a hard disk (e.g., a magnetic disk, an optical disk, a magneto-optic disk, a solid state disk, and/or the like), a compact disc (CD), a digital versatile disc (DVD), a floppy disk, a cartridge, a magnetic tape, a CD-ROM, RAM, PROM, EPROM, FLASH-EPROM, NV-RAM, and/or another type of computer readable medium, along with a corresponding drive.

Input interface 310 includes a component that permits device 300 to receive information, such as via user input (e.g., a touchscreen display, a keyboard, a keypad, a mouse, a button, a switch, a microphone, a camera, and/or the like). Additionally or alternatively, in some embodiments input interface 310 includes a sensor that senses information (e.g., a global positioning system (GPS) receiver, an accelerometer, a gyroscope, an actuator, and/or the like). Output interface 312 includes a component that provides output information from device 300 (e.g., a display, a speaker, one or more light-emitting diodes (LEDs), and/or the like).

In some embodiments, communication interface 314 includes a transceiver-like component (e.g., a transceiver, a separate receiver and transmitter, and/or the like) that permits device 300 to communicate with other devices via a wired connection, a wireless connection, or a combination of wired and wireless connections. In some examples, communication interface 314 permits device 300 to receive information from another device and/or provide information to another device. In some examples, communication interface 314 includes an Ethernet interface, an optical interface, a coaxial interface, an infrared interface, a radio frequency (RF) interface, a universal serial bus (USB) interface, a Wi-Fi^{®} interface, a cellular network interface, and/or the like.

In some embodiments, device 300 performs one or more processes described herein. Device 300 performs these processes based on processor 304 executing software instructions stored by a computer-readable medium, such as memory 305 and/or storage component 308. A computer-readable medium (e.g., a non-transitory computer readable medium) is defined herein as a non-transitory memory device. A non-transitory memory device includes memory space located inside a single physical storage device or memory space spread across multiple physical storage devices.

In some embodiments, software instructions are read into memory 306 and/or storage component 308 from another computer-readable medium or from another device via communication interface 314. When executed, software instructions stored in memory 306 and/or storage component 308 cause processor 304 to perform one or more processes described herein. Additionally or alternatively, hardwired circuitry is used in place of or in combination with software instructions to perform one or more processes described herein. Thus, embodiments described herein are not limited to any specific combination of hardware circuitry and software unless explicitly stated otherwise.

Memory 306 and/or storage component 308 includes data storage or at least one data structure (e.g., a database and/or the like). Device 300 is capable of receiving information from, storing information in, communicating information to, or searching information stored in the data storage or the at least one data structure in memory 306 or storage component 308. In some examples, the information includes network data, input data, output data, or any combination thereof.

In some embodiments, device 300 is configured to execute software instructions that are either stored in memory 306 and/or in the memory of another device (e.g., another device that is the same as or similar to device 300). As used herein, the term "module" refers to at least one instruction stored in memory 306 and/or in the memory of another device that, when executed by processor 304 and/or by a processor of another device (e.g., another device that is the same as or similar to device 300) cause device 300 (e.g., at least one component of device 300) to perform one or more processes described herein. In some embodiments, a module is implemented in software, firmware, hardware, and/or the like.

The number and arrangement of components illustrated in FIG. 3 are provided as an example. In some embodiments, device 300 can include additional components, fewer components, different components, or differently arranged components than those illustrated in FIG. 3. Additionally or alternatively, a set of components (e.g., one or more components) of device 300 can perform one or more functions described as being performed by another component or another set of components of device 300.

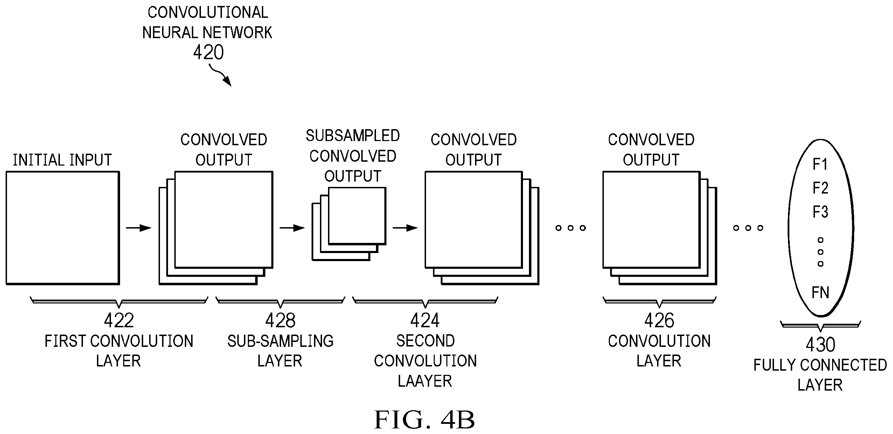

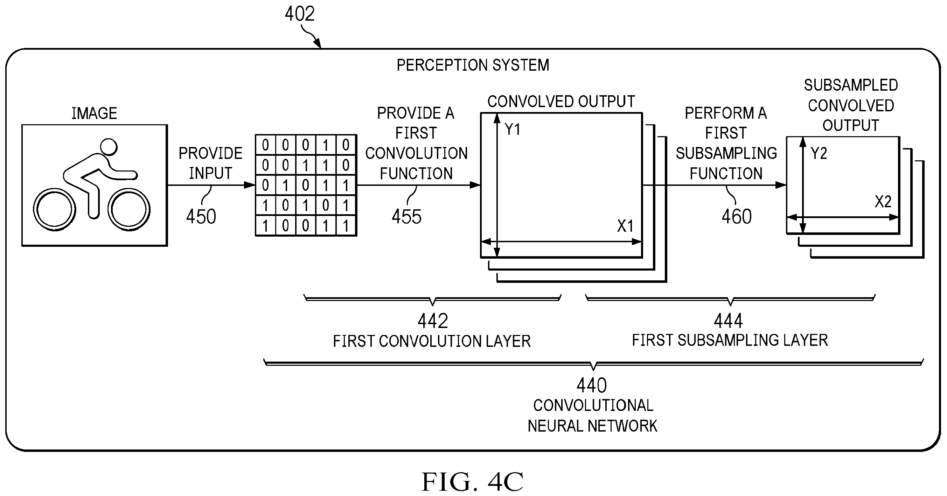

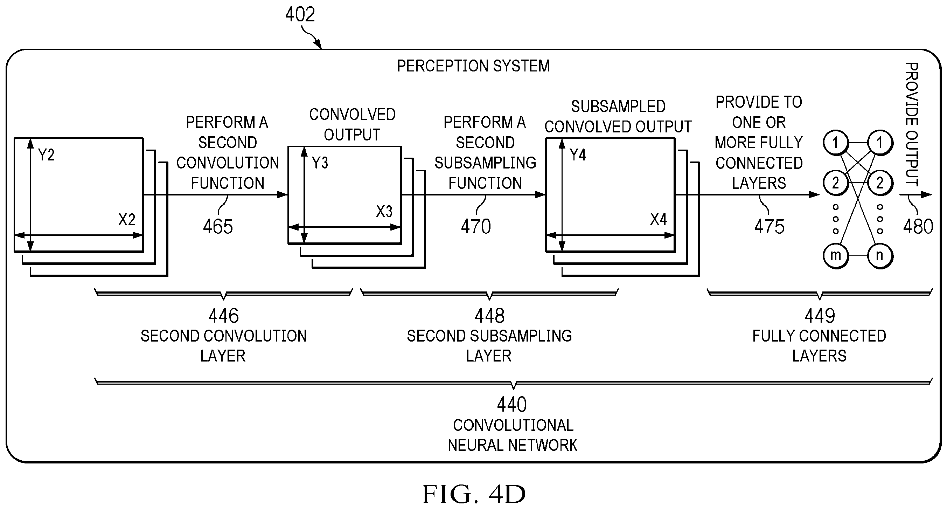

Referring now to FIG. 4, illustrated is an example block diagram of an autonomous vehicle software 400 (sometimes referred to as an "AV stack"). As illustrated, autonomous vehicle software 400 includes perception system 402 (sometimes referred to as a perception module), planning system 404 (sometimes referred to as a planning module), localization system 406 (sometimes referred to as a localization module), control system 408 (sometimes referred to as a control module), and database 410. In some embodiments, perception system 402, planning system 404, localization system 406, control system 408, and database 410 are included and/or implemented in an autonomous navigation system of a vehicle (e.g., autonomous vehicle compute 202f of vehicle 200). Additionally, or alternatively, in some embodiments perception system 402, planning system 404, localization system 406, control system 408, and database 410 are included in one or more standalone systems (e.g., one or more systems that are the same as or similar to autonomous vehicle software 400 and/or the like). In some examples, perception system 402, planning system 404, localization system 406, control system 408, and database 410 are included in one or more standalone systems that are located in a vehicle and/or at least one remote system as described herein. In some embodiments, any and/or all of the systems included in autonomous vehicle software 400 are implemented in software (e.g., in software instructions stored in memory) by computer hardware (e.g., by microprocessors, microcontrollers, application-specific integrated circuits (ASICs), Field Programmable Gate Arrays (FPGAs), and/or the like), chiplets, or distributed computing architectures. It will also be understood that, in some embodiments, autonomous vehicle software 400 is configured to be in communication with a remote system (e.g., an autonomous vehicle system that is the same as or similar to remote AV system 114, a fleet management system 116 that is the same as or similar to fleet management system 116, a V2I system that is the same as or similar to V2I system 118, and/or the like).

In some embodiments, perception system 402 receives data associated with at least one physical object (e.g., data that is used by perception system 402 to detect the at least one physical object) in an environment and classifies the at least one physical object. In some examples, perception system 402 receives image data captured by at least one camera (e.g., cameras 202a), the image associated with (e.g., representing) one or more physical objects within a field of view of the at least one camera. In such an example, perception system 402 classifies at least one physical object based on one or more groupings of physical objects (e.g., bicycles, vehicles, traffic signs, pedestrians, and/or the like). In some embodiments, perception system 402 transmits data associated with the classification of the physical objects to planning system 404 based on perception system 402 classifying the physical objects.

In some embodiments, planning system 404 receives data associated with a destination and generates data associated with at least one route (e.g., routes 106) along which a vehicle (e.g., vehicles 102) can travel along toward a destination. In some embodiments, planning system 404 periodically or continuously receives data from perception system 402 (e.g., data associated with the classification of physical objects, described above) and planning system 404 updates the at least one trajectory or generates at least one different trajectory based on the data generated by perception system 402. In other words, planning system 404 may perform tactical function-related tasks that are required to operate vehicle 102 in on-road traffic. Tactical efforts involve maneuvering the vehicle in traffic during a trip, including but not limited to deciding whether and when to overtake another vehicle, change lanes, or selecting an appropriate speed, acceleration, deacceleration, etc. In some embodiments, planning system 404 receives data associated with an updated position of a vehicle (e.g., vehicles 102) from localization system 406 and planning system 404 updates the at least one trajectory or generates at least one different trajectory based on the data generated by localization system 406.

In some embodiments, localization system 406 receives data associated with (e.g., representing) a location of a vehicle (e.g., vehicles 102) in an area. In some examples, localization system 406 receives LiDAR data associated with at least one point cloud generated by at least one LiDAR sensor (e.g., LiDAR sensors 202b). In certain examples, localization system 406 receives data associated with at least one point cloud from multiple LiDAR sensors and localization system 406 generates a combined point cloud based on each of the point clouds. In these examples, localization system 406 compares the at least one point cloud or the combined point cloud to two-dimensional (2D) and/or a three-dimensional (3D) map of the area stored in database 410. Localization system 406 then determines the position of the vehicle in the area based on localization system 406 comparing the at least one point cloud or the combined point cloud to the map. In some embodiments, the map includes a combined point cloud of the area generated prior to navigation of the vehicle. In some embodiments, maps include, without limitation, high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations thereof), and maps describing the spatial locations of road features such as crosswalks, traffic signs or other travel signals of various types. In some embodiments, the map is generated in real-time based on the data received by the perception system.

In another example, localization system 406 receives Global Navigation Satellite System (GNSS) data generated by a global positioning system (GPS) receiver. In some examples, localization system 406 receives GNSS data associated with the location of the vehicle in the area and localization system 406 determines a latitude and longitude of the vehicle in the area. In such an example, localization system 406 determines the position of the vehicle in the area based on the latitude and longitude of the vehicle. In some embodiments, localization system 406 generates data associated with the position of the vehicle. In some examples, localization system 406 generates data associated with the position of the vehicle based on localization system 406 determining the position of the vehicle. In such an example, the data associated with the position of the vehicle includes data associated with one or more semantic properties corresponding to the position of the vehicle.

In some embodiments, control system 408 receives data associated with at least one trajectory from planning system 404 and control system 408 controls operation of the vehicle. In some examples, control system 408 receives data associated with at least one trajectory from planning system 404 and control system 408 controls operation of the vehicle by generating and transmitting control signals to cause a powertrain control system (e.g., DBW system 202h, powertrain control system 204, and/or the like), a steering control system (e.g., steering control system 206), and/or a brake system (e.g., brake system 208) to operate. For example, control system 408 is configured to perform operational functions such as a lateral vehicle motion control or a longitudinal vehicle motion control. The lateral vehicle motion control causes activities necessary for the regulation of the y-axis component of vehicle motion. The longitudinal vehicle motion control causes activities necessary for the regulation of the x-axis component of vehicle motion. In an example, where a trajectory includes a left turn, control system 408 transmits a control signal to cause steering control system 206 to adjust a steering angle of vehicle 200, thereby causing vehicle 200 to turn left. Additionally, or alternatively, control system 408 generates and transmits control signals to cause other devices (e.g., headlights, turn signal, door locks, windshield wipers, and/or the like) of vehicle 200 to change states.

In some embodiments, perception system 402, planning system 404, localization system 406, and/or control system 408 implement at least one machine learning model (e.g., at least one multilayer perceptron (MLP), at least one convolutional neural network (CNN), at least one recurrent neural network (RNN), at least one autoencoder, at least one transformer, and/or the like). In some examples, perception system 402, planning system 404, localization system 406, and/or control system 408 implement at least one machine learning model alone or in combination with one or more of the above-noted systems. In some examples, perception system 402, planning system 404, localization system 406, and/or control system 408 implement at least one machine learning model as part of a pipeline (e.g., a pipeline for identifying one or more objects located in an environment and/or the like). An example of an implementation of a machine learning model is included below with respect to FIGS. 4B-4D.

Database 410 stores data that is transmitted to, received from, and/or updated by perception system 402, planning system 404, localization system 406 and/or control system 408. In some examples, database 410 includes a storage component (e.g., a storage component that is the same as or similar to storage component 308 of FIG. 3) that stores data and/or software related to the operation and uses at least one system of autonomous vehicle software 400. In some embodiments, database 410 stores data associated with 2D and/or 3D maps of at least one area. In some examples, database 410 stores data associated with 2D and/or 3D maps of a portion of a city, multiple portions of multiple cities, multiple cities, a county, a state, a State (e.g., a country), and/or the like). In such an example, a vehicle (e.g., a vehicle that is the same as or similar to vehicles 102 and/or vehicle 200) can drive along one or more drivable regions (e.g., single-lane roads, multi-lane roads, highways, back roads, off road trails, and/or the like) and cause at least one LiDAR sensor (e.g., a LiDAR sensor that is the same as or similar to LiDAR sensors 202b) to generate data associated with an image representing the objects included in a field of view of the at least one LiDAR sensor.

In some embodiments, database 410 can be implemented across a plurality of devices. In some examples, database 410 is included in a vehicle (e.g., a vehicle that is the same as or similar to vehicles 102 and/or vehicle 200), an autonomous vehicle system (e.g., an autonomous vehicle system that is the same as or similar to remote AV system 114, a fleet management system (e.g., a fleet management system that is the same as or similar to fleet management system 116 of FIG. 1, a V2I system (e.g., a V2I system that is the same as or similar to V2I system 118 of FIG. 1) and/or the like.

Referring now to FIG. 4B, illustrated is a diagram of an implementation of a machine learning model. More specifically, illustrated is a diagram of an implementation of a convolutional neural network (CNN) 420. For purposes of illustration, the following description of CNN 420 will be with respect to an implementation of CNN 420 by perception system 402. However, it will be understood that in some examples CNN 420 (e.g., one or more components of CNN 420) is implemented by other systems different from, or in addition to, perception system 402 such as planning system 404, localization system 406, and/or control system 408. While CNN 420 includes certain features as described herein, these features are provided for the purpose of illustration and are not intended to limit the present disclosure.

CNN 420 includes a plurality of convolution layers including first convolution layer 422, second convolution layer 424, and convolution layer 426. In some embodiments, CNN 420 includes sub-sampling layer 428 (sometimes referred to as a pooling layer). In some embodiments, sub-sampling layer 428 and/or other subsampling layers have a dimension (i.e., an amount of nodes) that is less than a dimension of an upstream system. By virtue of sub-sampling layer 428 having a dimension that is less than a dimension of an upstream layer, CNN 420 consolidates the amount of data associated with the initial input and/or the output of an upstream layer to thereby decrease the amount of computations necessary for CNN 420 to perform downstream convolution operations. Additionally, or alternatively, by virtue of sub-sampling layer 428 being associated with (e.g., configured to perform) at least one subsampling function (as described below with respect to FIGS. 4C and 4D), CNN 420 consolidates the amount of data associated with the initial input.

Perception system 402 performs convolution operations based on perception system 402 providing respective inputs and/or outputs associated with each of first convolution layer 422, second convolution layer 424, and convolution layer 426 to generate respective outputs. In some examples, perception system 402 implements CNN 420 based on perception system 402 providing data as input to first convolution layer 422, second convolution layer 424, and convolution layer 426. In such an example, perception system 402 provides the data as input to first convolution layer 422, second convolution layer 424, and convolution layer 426 based on perception system 402 receiving data from one or more different systems (e.g., one or more systems of a vehicle that is the same as or similar to vehicle 102), a remote AV system that is the same as or similar to remote AV system 114, a fleet management system that is the same as or similar to fleet management system 116, a V2I system that is the same as or similar to V2I system 118, and/or the like). A detailed description of convolution operations is included below with respect to FIG. 4C.

In some embodiments, perception system 402 provides data associated with an input (referred to as an initial input) to first convolution layer 422 and perception system 402 generates data associated with an output using first convolution layer 422. In some embodiments, perception system 402 provides an output generated by a convolution layer as input to a different convolution layer. For example, perception system 402 provides the output of first convolution layer 422 as input to sub-sampling layer 428, second convolution layer 424, and/or convolution layer 426. In such an example, first convolution layer 422 is referred to as an upstream layer and sub-sampling layer 428, second convolution layer 424, and/or convolution layer 426 are referred to as downstream layers. Similarly, in some embodiments perception system 402 provides the output of sub-sampling layer 428 to second convolution layer 424 and/or convolution layer 426 and, in this example, sub-sampling layer 428 would be referred to as an upstream layer and second convolution layer 424 and/or convolution layer 426 would be referred to as downstream layers.

In some embodiments, perception system 402 processes the data associated with the input provided to CNN 420 before perception system 402 provides the input to CNN 420. For example, perception system 402 processes the data associated with the input provided to CNN 420 based on perception system 402 normalizing sensor data (e.g., image data, LiDAR data, radar data, and/or the like).

In some embodiments, CNN 420 generates an output based on perception system 402 performing convolution operations associated with each convolution layer. In some examples, CNN 420 generates an output based on perception system 402 performing convolution operations associated with each convolution layer and an initial input. In some embodiments, perception system 402 generates the output and provides the output as fully connected layer 430. In some examples, perception system 402 provides the output of convolution layer 426 as fully connected layer 430, where fully connected layer 430 includes data associated with a plurality of feature values referred to as F1, F2 ... FN. In this example, the output of convolution layer 426 includes data associated with a plurality of output feature values that represent a prediction.

In some embodiments, perception system 402 identifies a prediction from among a plurality of predictions based on perception system 402 identifying a feature value that is associated with the highest likelihood of being the correct prediction from among the plurality of predictions. For example, where fully connected layer 430 includes feature values F1, F2, ... FN, and F1 is the greatest feature value, perception system 402 identifies the prediction associated with F1 as being the correct prediction from among the plurality of predictions. In some embodiments, perception system 402 trains CNN 420 to generate the prediction. In some examples, perception system 402 trains CNN 420 to generate the prediction based on perception system 402 providing training data associated with the prediction to CNN 420.

Referring now to FIGS. 4C and 4D, illustrated is a diagram of example operation of CNN 440 by perception system 402. In some embodiments, CNN 440 (e.g., one or more components of CNN 440) is the same as, or similar to, CNN 420 (e.g., one or more components of CNN 420) (see FIG. 4B).

At step 450, perception system 402 provides data associated with an image as input to CNN 440 (step 450). For example, as illustrated, perception system 402 provides the data associated with the image to CNN 440, where the image is a greyscale image represented as values stored in a two-dimensional (2D) array. In some embodiments, the data associated with the image may include data associated with a color image, the color image represented as values stored in a three-dimensional (3D) array. Additionally, or alternatively, the data associated with the image may include data associated with an infrared image, a radar image, and/or the like.

At step 455, CNN 440 performs a first convolution function. For example, CNN 440 performs the first convolution function based on CNN 440 providing the values representing the image as input to one or more neurons (not explicitly illustrated) included in first convolution layer 442. In this example, the values representing the image can correspond to values representing a region of the image (sometimes referred to as a receptive field). In some embodiments, each neuron is associated with a filter (not explicitly illustrated). A filter (sometimes referred to as a kernel) is representable as an array of values that corresponds in size to the values provided as input to the neuron. In one example, a filter may be configured to identify edges (e.g., horizontal lines, vertical lines, straight lines, and/or the like). In successive convolution layers, the filters associated with neurons may be configured to identify successively more complex patterns (e.g., arcs, objects, and/or the like).

In some embodiments, CNN 440 performs the first convolution function based on CNN 440 multiplying the values provided as input to each of the one or more neurons included in first convolution layer 442 with the values of the filter that corresponds to each of the one or more neurons. For example, CNN 440 can multiply the values provided as input to each of the one or more neurons included in first convolution layer 442 with the values of the filter that corresponds to each of the one or more neurons to generate a single value or an array of values as an output. In some embodiments, the collective output of the neurons of first convolution layer 442 is referred to as a convolved output. In some embodiments, where each neuron has the same filter, the convolved output is referred to as a feature map.

In some embodiments, CNN 440 provides the outputs of each neuron of first convolutional layer 442 to neurons of a downstream layer. For purposes of clarity, an upstream layer can be a layer that transmits data to a different layer (referred to as a downstream layer). For example, CNN 440 can provide the outputs of each neuron of first convolutional layer 442 to corresponding neurons of a subsampling layer. In an example, CNN 440 provides the outputs of each neuron of first convolutional layer 442 to corresponding neurons of first subsampling layer 444. In some embodiments, CNN 440 adds a bias value to the aggregates of all the values provided to each neuron of the downstream layer. For example, CNN 440 adds a bias value to the aggregates of all the values provided to each neuron of first subsampling layer 444. In such an example, CNN 440 determines a final value to provide to each neuron of first subsampling layer 444 based on the aggregates of all the values provided to each neuron and an activation function associated with each neuron of first subsampling layer 444.

At step 460, CNN 440 performs a first subsampling function. For example, CNN 440 can perform a first subsampling function based on CNN 440 providing the values output by first convolution layer 442 to corresponding neurons of first subsampling layer 444. In some embodiments, CNN 440 performs the first subsampling function based on an aggregation function. In an example, CNN 440 performs the first subsampling function based on CNN 440 determining the maximum input among the values provided to a given neuron (referred to as a max pooling function). In another example, CNN 440 performs the first subsampling function based on CNN 440 determining the average input among the values provided to a given neuron (referred to as an average pooling function). In some embodiments, CNN 440 generates an output based on CNN 440 providing the values to each neuron of first subsampling layer 444, the output sometimes referred to as a subsampled convolved output.

At step 465, CNN 440 performs a second convolution function. In some embodiments, CNN 440 performs the second convolution function in a manner similar to how CNN 440 performed the first convolution function, described above. In some embodiments, CNN 440 performs the second convolution function based on CNN 440 providing the values output by first subsampling layer 444 as input to one or more neurons (not explicitly illustrated) included in second convolution layer 446. In some embodiments, each neuron of second convolution layer 446 is associated with a filter, as described above. The filter(s) associated with second convolution layer 446 may be configured to identify more complex patterns than the filter associated with first convolution layer 442, as described above.

In some embodiments, CNN 440 performs the second convolution function based on CNN 440 multiplying the values provided as input to each of the one or more neurons included in second convolution layer 446 with the values of the filter that corresponds to each of the one or more neurons. For example, CNN 440 can multiply the values provided as input to each of the one or more neurons included in second convolution layer 446 with the values of the filter that corresponds to each of the one or more neurons to generate a single value or an array of values as an output.

In some embodiments, CNN 440 provides the outputs of each neuron of second convolutional layer 446 to neurons of a downstream layer. For example, CNN 440 can provide the outputs of each neuron of first convolutional layer 442 to corresponding neurons of a subsampling layer. In an example, CNN 440 provides the outputs of each neuron of first convolutional layer 442 to corresponding neurons of second subsampling layer 448. In some embodiments, CNN 440 adds a bias value to the aggregates of all the values provided to each neuron of the downstream layer. For example, CNN 440 adds a bias value to the aggregates of all the values provided to each neuron of second subsampling layer 448. In such an example, CNN 440 determines a final value to provide to each neuron of second subsampling layer 448 based on the aggregates of all the values provided to each neuron and an activation function associated with each neuron of second subsampling layer 448.

At step 470, CNN 440 performs a second subsampling function. For example, CNN 440 can perform a second subsampling function based on CNN 440 providing the values output by second convolution layer 446 to corresponding neurons of second subsampling layer 448. In some embodiments, CNN 440 performs the second subsampling function based on CNN 440 using an aggregation function. In an example, CNN 440 performs the first subsampling function based on CNN 440 determining the maximum input or an average input among the values provided to a given neuron, as described above. In some embodiments, CNN 440 generates an output based on CNN 440 providing the values to each neuron of second subsampling layer 448.

At step 475, CNN 440 provides the output of each neuron of second subsampling layer 448 to fully connected layers 449. For example, CNN 440 provides the output of each neuron of second subsampling layer 448 to fully connected layers 449 to cause fully connected layers 449 to generate an output. In some embodiments, fully connected layers 449 are configured to generate an output associated with a prediction (sometimes referred to as a classification). The prediction may include an indication that an object included in the image provided as input to CNN 440 includes an object, a set of objects, and/or the like. In some embodiments, perception system 402 performs one or more operations and/or provides the data associated with the prediction to a different system, described herein.

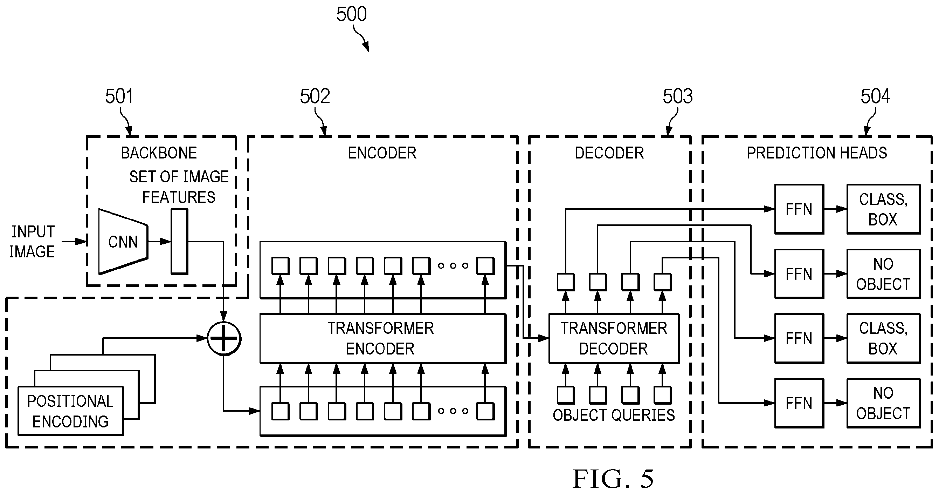

FIG. 5 is a block diagram of a DETR encoder-decoder architecture 500. Architecture 500 includes backbone 501, transformer encoder 502, transformer decoder 503 and prediction heads 504. The number and arrangement of components illustrated in FIG. 5 are provided as an example. In some embodiments, architecture 500 can include additional components, fewer components, different components, or differently arranged components than those illustrated in FIG. 5. Additionally or alternatively, a set of components (e.g., one or more components) of architecture 500 can perform one or more functions described as being performed by another component or another set of components of architecture 500.

For purposes of illustration, the following description of architecture 500 (referred to as a DETR architecture 500) will be with respect to an implementation of architecture 500 by perception system 402. However, it will be understood that in some examples DETR architecture 500 (e.g., one or more components of DETR architecture 500) is implemented by other systems different from, or in addition to, perception system 402 such as planning system 404, localization system 406, and/or control system 408. While DETR architecture 500 includes certain features as described herein, these features are provided for the purpose of illustration and are not intended to limit the present disclosure. Additionally, DETR architecture 500 can be replaced with any end-to-end detector, including but not limited to: Deformable DETR, sparse RCNN and any other deep learning architectures that can perform object detection. DETR architecture 500 can be implemented within any deep learning architecture for object detection and tracking.

Backbone 501 includes a CNN (e.g., CNN 440) to learn a two-dimensional (2D) lower-resolution feature map of an input image (e.g., with 3 color channels). Transformer encoder 502 performs a 1x1 convolution on the feature map to reduce the channel dimension to a smaller dimension, creating a new feature map. Each layer of transformer encoder 502 includes a multi-head self-attention module and a feed forward network (FFN). Since transformer encoder 502 expects a sequence as input, transformer encoder 502 flattens the spatial dimensions of the new feature map into one dimension. Since DETR architecture 500 is permutation-invariant, fixed positional encodings 506 are added (e.g., concatenated) to the input of each attention layer in transformer encoder 502.

Transformer decoder 503 includes a multi-headed self-attention mechanism and encoder-decoder attention mechanism (note explicitly illustrated). Transformer decoder 503 takes as input a small, fixed number of learned positional embeddings, called object queries, and adds them to the input of each attention layer. Each output embedding of transformer decoder 503 is passed to prediction heads 504 which include shared feed forward network (FFNs) that predict either classes/bounding boxes (respectively) or "no object" class.

In some embodiments, the FNNs include a 3-layer perceptron with ReLU activation function and hidden dimension d, and a linear projection layer. The FFNs predict the normalized center coordinates, height, and width of the bounding box with respect to the input image, and the linear layer predicts the class label using a softmax function. Since a fixed-size set of N bounding boxes are predicted, where N is usually much larger than the actual number of objects of interest in an image, a "no object" class is used to represent that no object is detected within a slot. The "no-object" class plays a similar role to the "background" class in standard object detection approaches.

The parameters (e.g., weights) of DETR architecture 500 described above can be trained using backpropagation techniques that minimize a global loss function as described in the seminal paper. However, as described below, the training can be improved in terms of speed and accuracy by expressing the global loss function as a sum of an assignment-independent term and an assignment-dependent term.

After the DETR architecture 500 is trained it can be used in a variety of applications, including but not limited to using in a perception system 402 of an AV stack of an AV for detecting and tracking objects in an AV operating environment.

### New Expression for Global Loss

In the disclosure that follows, some notations of the seminal paper are adopted but also new notations are defined. Let $y = {\left\{{y}_{i}\right\}}_{j = 1}^{M}$ be the set of M ground truth objects, and $\hat{y} = {\left\{{\hat{y}}_{i}\right\}}_{i = N}^{N}$ the set of N predictions. At inference time, thresholding probabilities or scores will give a subset of the N predictions as actual objects. At training time, it is desired to select exactly M out of N predictions to correspond to the ground truth. Since typically N >> *M,* it is desired to solve an assignment problem with a rectangular cost matrix (as is done in the code released by the authors of the seminal paper), not a square cost matrix. Thus, instead of talking about a permutation, an injective mapping is defined s : G → B from the ground truth index set $G ≜ \left\{1,2,3 …M\right\}$ to the predicted box index set $B ≜ \left\{1,2,3 …M\right\}$. The matched set is defined as ${B}_{1} ≜ s \left(G\right)$, and the unmatched set is defined as ${B}_{2} ≜ \frac{B}{{B}_{1}}$ The inverse mapping *s⁻¹ : B₁* → G is naturally defined. In other words, starting from the ground truth indexed by index *j*, the assigned prediction is indexed by *s(j).* Starting from a prediction indexed by *i,* and already known to have had a ground truth assigned to it, the ground truth index is *s⁻¹(i).*

As described in the seminal paper, let *yᵢ* = (*cⱼ, bⱼ*) be the ground truth with object class label *cⱼ* and bounding box vector *bⱼ.* Let 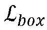 *(bⱼ,bₛ₍ⱼ₎*) be the loss of predicted bounding box *b̂*_{*s*(*j*)}when it is considered to represent *bⱼ.* Let *p̂ᵢ*(c*ₛ*-1_{(*i*)}) denote the probability of the target object class in the i-th prediction, and *p̂ᵢ*(Ø) of background.

For a given set of network weight vectors w, and a given mapping s, the loss has to do with three parts: 1) the object class probabilities in the matched set *B*₁; 2) the background probabilities in "the rest" set *B*₂; and 3) the losses 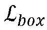 between G and *B*₁. The third part is the same as described in the seminal paper and details will be omitted here. The first two parts depend on the likelihood $L ≜ {\prod }_{j ∈ {B}_{1}} {\hat{p}}_{j} \left({c}_{{s}^{- 1} \left(j\right)}\right) {\prod }_{k ∈ {B}_{2}} {\hat{p}}_{k} \left(∅\right) .$ [1]

Note that both terms Eq. [1] depend on the mapping s. However, the following term does not depend on the mapping s: ${L}_{∅} ≜ {\prod }_{i ∈ {B}_{1}} {\hat{P}}_{i} \left(∅\right) .$ [2]

Thus the ratio $\frac{L}{{L}_{∅}} = {\prod }_{j ∈ {B}_{1}} \frac{{\hat{p}}_{j} \left({c}_{{s}^{- 1} \left(j\right)}\right)}{{\hat{p}}_{j} \left(∅\right)}$ [3] only has to do with the index sets G and *B*₁. The global loss (which is called the Hungarian loss in the seminal paper) is therefore written as $\begin{matrix}L \left(y, \hat{y}, s\right) = - log \left(\frac{L}{{L}_{∅}}\right) - log \left({L}_{∅}\right) + {\sum }_{j = 1}^{M} {L}_{box} \left({b}_{j}, {\hat{b}}_{s \left(j\right)}\right) = \\ {\sum }_{j = 1}^{M} \left(-log {\hat{p}}_{s \left(j\right)}\left({c}_{j}\right)+log {\hat{p}}_{s \left(j\right)}\left(∅\right)+{L}_{box}\left({b}_{j}, {\hat{b}}_{s \left(j\right)}\right)\right) - {\sum }_{i = 1}^{N} log {\hat{p}}_{i} \left(∅\right) .\end{matrix}$ [4]

### New Cost Matrix

The matching dependent terms in Eq. [4] can be written as a total assignment cost $\begin{matrix}L \left(y, \hat{y}, s\right) = {\sum }_{j = 1}^{M} \left(-log {\hat{p}}_{s , j}\left({c}_{j}\right)+log {\hat{p}}_{s \left(j\right)}\left(∅\right)+{L}_{box}\left({b}_{j}, {\hat{b}}_{s \left(j\right)}\right)\right) - {\sum }_{i = 1}^{N} log {\hat{p}}_{i} \left(∅\right) \\ ≜ {\sum }_{j = 1}^{M} C \left(s\left(j\right),j\right) + {L}_{background} ,\end{matrix}$ [5] where the (i, *j*)-th entry of an *N* x M cost matrix C is defined as $C \left(i, j\right) ≜ - log {\hat{p}}_{j} \left({c}_{j}\right) + log {\hat{p}}_{i} \left(∅\right) + {L}_{box} \left({b}_{j}, {\hat{b}}_{i}\right) .$ [6]

It is now clear that minimizing the global loss includes two steps:
1. Solve an assignment problem using the cost matrix defined in Eq. [6]: $\hat{s} = \begin{matrix}argmin \\ s : G \to B\end{matrix} {\sum }_{j = 1}^{M} C \left(s\left(j\right),j\right) .$ [7]
2. Minimize $L \left(y, \hat{y}, s\right) ≜ {L}_{assign} + {L}_{background} .$ [8]

### Generalized Gradients

The generalized gradients of the optimal assignment cost 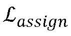 with respect to the network weights w can be obtained using the solution given in Xi Gao, Han Zhang, Aliakbar Panahi, and Tom Arodz. Combinatorial losses through generalized gradients of integer linear programs. arXiv preprint arXiv:1910.08211, 2019. Thus, the generalized gradients of 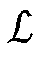 (*y,ŷ,s*) can be obtained and used in training as described in Frank H Clarke. *Optimization and nonsmooth analysis.* SIAM, 1990.

More specifically, the cost matrix C in Eq. [6] is defined by the ground truth y and the network predictions ŷ(*w*), as a function of the network weight vector w. If the columns of C are stacked up to form a cost vector c(w), then the assignment problem can be formulated as an ILP problem with parameters *(c(w),* A, *b)* where both A and b are constants specifying the inequality constraints of a valid assignment as described in David F Crouse. On implementing 2d rectangular assignment algorithms. IEEE Transactions on Aerospace and Electronic Systems, 52:1679-1696, 2016. The cost matrix can be padded with almost zero random values to form a square matrix with equality constraints, so that the results in can be applied as in Xi Gao, Han Zhang, Aliakbar Panahi, and Tom Arodz. Combinatorial losses through generalized gradients of integer linear programs. arXiv preprint arXiv:1910.08211, 2019.

Let *û* be an optimal solution (in the form of a column vector) to the assignment problem; practically speaking it is almost always unique. Then according to Algorithm 1 in Xi Gao, Han Zhang, Aliakbar Panahi, and Tom Arodz. Combinatorial losses through generalized gradients of integer linear programs. arXiv preprint arXiv:1910.08211, 2019, we have $\frac{\partial {L}_{assign}}{\partial w} = {u}^{T} \frac{\partial c}{\partial w} .$ [9]

This provides a way to calculate the gradients with *pytoch* by treating the optimal assignment solution *û* as a constant. This means that only the numerical values of the cost matrix are taken and call to a Hungarian solver (under torch.no grad() in the code based on the seminal paper). The gradient-attached optimal cost is summed according to the solution *û*, together with the background terms, and the loss in Eq. [8] is backpropagated.

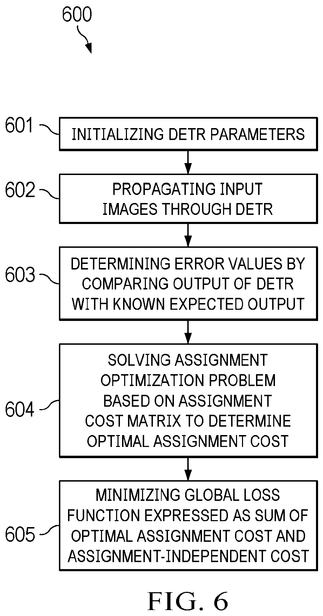

FIG. 6 is a flow diagram of a DETR transformer process 600, according to one or more embodiments. In some embodiments, process 600 can be performed by perception system 402.

In some embodiments, process 600 includes: initializing parameters of the DETR (601), propagating the input image through the DETR (602), determining error values by comparing the output of DETR with known expected output (603), and iteratively updating the parameters in the DETR based on the error values by minimizing a global loss. In some embodiments minimizing the global loss includes generating an assignment cost matrix (604), solving an assignment optimization problem based on the assignment cost matrix to obtain an optimal assignment cost (605), and then minimizing a global loss function that is expressed as a sum of the optimal assignment cost and an assignment-independent loss (606).

Process 600 described above has the following advantages over the process disclosed in the seminal paper: 1) the assignment cost and the global loss are aligned; 2) the unmatched predictions have different probabilities of background in them that depend on the assignment, and therefore they are not ignored in the cost matrix; 3) The cross entropy loss is used in the new cost matrix as opposed to the raw probabilities (the problem with scaling, if it still exists, can be solved separately); 4) the challenge of the rectangular cost matrix is solved by using the ratio in Eq. [3] that results in the cost matrix in Eq. [6], i.e., every row subtracts the cross entropy loss that corresponds to the background; 5) there is a normalization by the number of boxes in their global loss definition for generalized intersection over union (GIOU) based losses, which is not done in their total assignment cost. The loss as expressed by Eq. [4] does not justify the normalization, i.e., a batch having more boxes has a bigger impact.

In the foregoing description, aspects and embodiments of the present disclosure have been described with reference to numerous specific details that can vary from implementation to implementation. Accordingly, the description and drawings are to be regarded in an illustrative rather than a restrictive sense. Any definitions expressly set forth herein for terms contained in such claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

## Claims

1. A method of training a detection transformer, DETR (500), to detect and track objects in an autonomous vehicle operating environment, the method comprising:
initializing (601), with at least one processor, parameters of the DETR (500);
propagating (602), with the at least one processor, an input image through the DETR (500) to obtain, for each prediction in a set of predictions i) an object class probability for each object class in a set object classes and a non-object class probability for a non-object class, and ii) a bounding box prediction;
determining (603), with the at least one processor, error values by comparing the outputs of the DETR (500) with known expected outputs, wherein each known expected output comprises a class label from the set of object classes and a known bounding box; and
iteratively updating, with the at least one processor, the parameters in the DETR (500) based on the error values by minimizing a global loss,
wherein minimizing the global loss comprises:
generating an assignment cost matrix, wherein each entry of the assignment cost matrix corresponds to a respective prediction and a respective known expected output and comprises a sum of I) a negative logarithm of a predicted probability for the class label included in the respective known expected output included in the respective prediction, II) a logarithm of a predicted probability for the non-object class included in the respective prediction, and III) a bounding box loss between a predicted bounding box in the respective prediction and a known bounding box included in the respective known expected output;
solving (604) an assignment optimization problem based on the assignment cost matrix to obtain an assignment of predictions of the known expected outputs that minimizes an assignment cost across all known expected outputs, the assignment cost comprising a summation of the costs of assigning each prediction to its respective known expected output; and
minimizing (605) a global loss function that is expressed as a sum of the minimized assignment cost and an assignment-independent background loss term defined as a sum of a negative logarithm of each predicted probability for the non-object class.

2. The method of claim 1, wherein the assignment cost matrix is a rectangular matrix.

3. The method of claim 1, wherein the assignment cost matrix is defined by a ground truth and network predictions as a function of a network weight operator.

4. The method of claim 1, further comprising padding the assignment cost matrix with almost zero random values to form a square matrix.

5. The method of claim 1, further comprising subtracting from each row of the cost matrix a cross-entropy loss that corresponds to a background class.

6. The method of claim 1, further comprising solving the assignment problem using a Hungarian solver.

7. The method of claim 1, wherein the assignment-independent term is unmatched prediction loss.

8. An object detector for detecting objects in an autonomous vehicle operating environment comprising:
a convolutional layer (501);
a transformer encoder (502);
a transformer decoder (503); and
at least one prediction head (504),
wherein parameters of the object detector are determined by performing the method of any one of claims 1 to 7.

9. The object detector of claim 8, wherein the convolutional layer (501) is a convolution neural network.

10. A method comprising:
obtaining, using at least one processor, image data associated with an image from at least one sensor of a vehicle, the image captured by the at least one sensor;
detecting, with the at least one processor, at least one object captured in the image, wherein the detecting comprises:
inputting the image data into a detection transformer, DETR, the detection transformer having parameters determined according to the method of any one of claims 1 to 7; and
generating, with the at least one processor, at least one control signal for controlling the vehicle based at least in part on the detected at least one object.

## Patentansprüche

1. Verfahren zum Trainieren eines Detection Transformer, DETR (500), um Objekte in einer Betriebsumgebung eines autonomen Fahrzeugs zu detektieren und zu verfolgen, wobei das Verfahren Folgendes umfasst:
Initialisieren (601), mit mindestens einem Prozessor, von Parametern des DETR (500);
Propagieren (602), mit dem mindestens einen Prozessor, eines Eingabebilds durch den DETR (500), um für jede Vorhersage in einem Satz Vorhersagen i) eine Objektklassenwahrscheinlichkeit für jede Objektklasse in einem Satz Objektklassen und eine Nichtobjektklassenwahrscheinlichkeit für eine Nichtobjektklasse und ii) eine Begrenzungsrahmenvorhersage zu erhalten;
Bestimmen (603), mit dem mindestens einen Prozessor, von Fehlerwerten durch Vergleichen der Ausgaben des DETR (500) mit bekannten erwarteten Ausgaben, wobei jede bekannte erwartete Ausgabe eine Klassenbezeichnung aus dem Satz Objektklassen und einen bekannten Begrenzungsrahmen umfasst; und
iteratives Aktualisieren, mit dem mindestens einen Prozessor, der Parameter in dem DETR (500) basierend auf den Fehlerwerten durch Minimieren eines globalen Verlusts,
wobei das Minimieren des globalen Verlusts Folgendes umfasst:
Erzeugen einer Zuweisungskostenmatrix, wobei jeder Eintrag der Zuweisungskostenmatrix einer jeweiligen Vorhersage und einer jeweiligen bekannten erwarteten Ausgabe entspricht und eine Summe I) eines negativen Logarithmus einer vorhergesagten Wahrscheinlichkeit für die Klassenbezeichnung, die in der jeweiligen bekannten erwarteten Ausgabe enthalten ist, die in der jeweiligen Vorhersage enthalten ist, II) eines Logarithmus einer vorhergesagten Wahrscheinlichkeit für die Nichtobjektklasse, die in der jeweiligen Vorhersage enthalten ist, und III) eines Begrenzungsrahmenverlusts zwischen einem vorhergesagten Begrenzungsrahmen in der jeweiligen Vorhersage und einem bekannten Begrenzungsrahmen, der in der jeweiligen bekannten erwarteten Ausgabe enthalten ist, umfasst;
Lösen (604) eines Zuweisungsoptimierungsproblems basierend auf der Zuweisungskostenmatrix, um eine Zuweisung von Vorhersagen der bekannten erwarteten Ausgaben zu erhalten, die Zuweisungskosten über alle bekannten erwarteten Ausgaben hinweg minimiert, wobei die Zuweisungskosten eine Summierung der Kosten des Zuweisens jeder Vorhersage zu ihrer jeweiligen bekannten erwarteten Ausgabe umfassen; und
Minimieren (605) einer globalen Verlustfunktion, die als eine Summe der minimierten Zuweisungskosten und eines zuweisungsunabhängigen Hintergrundverlustterms ausgedrückt wird, der als eine Summe eines negativen Logarithmus jeder vorhergesagten Wahrscheinlichkeit für die Nichtobjektklasse definiert ist.

2. Verfahren nach Anspruch 1, wobei die Zuweisungskostenmatrix eine rechteckige Matrix ist.

3. Verfahren nach Anspruch 1, wobei die Zuweisungskostenmatrix durch eine Grundwahrheit und Netzwerkvorhersagen abhängig von einem Netzwerkgewichtsoperator definiert ist.

4. Verfahren nach Anspruch 1, das ferner das Auffüllen der Zuweisungskostenmatrix mit nahezu null Zufallswerten umfasst, um eine quadratische Matrix zu bilden.

5. Verfahren nach Anspruch 1, das ferner das Subtrahieren eines Kreuzentropieverlusts, der einer Hintergrundklasse entspricht, von jeder Zeile der Kostenmatrix umfasst.

6. Verfahren nach Anspruch 1, das ferner das Lösen des Zuweisungsproblems unter Verwendung eines ungarischen Problemlösers umfasst.

7. Verfahren nach Anspruch 1, wobei der zuweisungsunabhängige Term ein nicht übereinstimmender Vorhersageverlust ist.

8. Objektdetektor zum Detektieren von Objekten in einer Betriebsumgebung eines autonomen Fahrzeugs, der Folgendes umfasst:
eine Faltungsschicht (501);
einen Transformer-Encoder (502);
einen Transformer-Decoder (503); und
mindestens einen Vorhersagekopf (504),
wobei Parameter des Objektdetektors durch Durchführen des Verfahrens nach einem der Ansprüche 1 bis 7 bestimmt werden.

9. Objektdetektor nach Anspruch 8, wobei die Faltungsschicht (501) ein neuronales Faltungsnetzwerk ist.

10. Verfahren, das Folgendes umfasst:
Erhalten, unter Verwendung mindestens eines Prozessors, von mit einem Bild assoziierten Bilddaten von mindestens einem Sensor eines Fahrzeugs, wobei das Bild durch den mindestens einen Sensor aufgenommen wird;
Detektieren, mit dem mindestens einen Prozessor, mindestens eines in dem Bild aufgenommenen Objekts, wobei das Detektieren Folgendes umfasst:
Eingeben der Bilddaten in einen Detection Transformer, DETR, wobei der Detection Transformer gemäß dem Verfahren nach einem der Ansprüche 1 bis 7 bestimmte Parameter aufweist; und
Erzeugen, mit dem mindestens einen Prozessor, mindestens eines Steuersignals zum Steuern des Fahrzeugs mindestens teilweise basierend auf dem mindestens einen detektierten Objekt.

## Revendications

1. Procédé d'entraînement d'un transformateur de détection, DETR (500), pour détecter et suivre des objets dans un environnement d'exploitation de véhicule autonome, le procédé comprenant les étapes suivantes :
initialiser (601), avec au moins un processeur, des paramètres du DETR (500) ;
propager (602), avec l'au moins un processeur, une image d'entrée à travers le DETR (500) pour obtenir, pour chaque prédiction dans un ensemble de prédictions i) une probabilité de classe d'objet pour chaque classe d'objet dans un ensemble de classes d'objet et une probabilité de classe de non-objet pour une classe de non-objet, et ii) une prédiction de boîte englobante ;
déterminer (603), avec l'au moins un processeur, des valeurs d'erreur en comparant les sorties du DETR (500) avec des sorties attendues connues, chaque sortie attendue connue comprenant une étiquette de classe de l'ensemble de classes d'objet et une boîte englobante connue ; et
mettre à jour, de manière itérative, avec l'au moins un processeur, les paramètres dans le DETR (500) sur la base des valeurs d'erreur en minimisant une perte globale, où la minimisation de la perte globale comprend les étapes suivantes :
générer une matrice de coût d'affectation, où chaque entrée de la matrice de coût d'affectation correspond à une prédiction respective et une sortie attendue connue respective et comprend une somme de i) un logarithme négatif d'une probabilité prédite pour l'étiquette de classe incluse dans la sortie attendue connue respective incluse dans la prédiction respective, ii) un logarithme d'une probabilité prédite pour la classe de non-objet incluse dans la prédiction respective, et iii) une perte de boîte englobante entre une boîte englobante prédite dans la prédiction respective et une boîte englobante connue incluse dans la sortie attendue connue respective ;
résoudre (604) un problème d'optimisation d'affectation basé sur la matrice de coûts d'affectation pour obtenir une affectation de prédictions des sorties attendues connues qui minimise un coût d'affectation sur toutes les sorties attendues connues, le coût d'affectation comprenant une addition des coûts d'affectation de chaque prédiction à sa sortie attendue connue respective ; et
minimiser (605) une fonction de perte globale qui est exprimée en tant que somme du coût d'affectation minimisé et d'un terme de perte de fond indépendant de l'affectation défini comme une somme d'un logarithme négatif de chaque probabilité prédite pour la classe de non-objet.

2. Procédé selon la revendication 1, dans lequel la matrice de coût d'affectation est une matrice rectangulaire.

3. Procédé selon la revendication 1, dans lequel la matrice de coût d'affectation est définie par une vérité de terrain et des prédictions de réseau en fonction d'un opérateur de pondération de réseau.

4. Procédé selon la revendication 1, comprenant en outre le remplissage de la matrice de coût d'affectation avec des valeurs aléatoires presque nulles pour former une matrice carrée.

5. Procédé selon la revendication 1, comprenant en outre de soustraire de chaque rangée de la matrice de coût une perte d'entropie croisée qui correspond à une classe de fond.

6. Procédé selon la revendication 1, comprenant en outre de résoudre le problème d'affectation au moyen d'un solveur hongrois.

7. Procédé selon la revendication 1, dans lequel le terme indépendant de l'affectation est une perte de prédiction non appariée.

8. Détecteur d'objet destiné à la détection d'objets dans un environnement d'exploitation d'un véhicule autonome comprenant :
une couche de convolution (501) ;
un encodeur de type Transformeur (502) ;
un décodeur de type Transformeur (503) ; et
au moins une tête de prédiction (504),
où des paramètres du détecteur d'objet sont déterminés en exécutant le procédé selon l'une quelconque des revendications 1 à 7.

9. Détecteur d'objet selon la revendication 8, dans lequel la couche de convolution (501) est un réseau neuronal de convolution.

10. Procédé comprenant les étapes suivantes :
obtenir, à l'aide d'au moins un processeur, des données d'image associées à une image d'au moins un capteur d'un véhicule, l'image étant capturée par l'au moins un capteur ;
détecter, par l'au moins un processeur, au moins un objet capturé dans l'image, la détection comprenant les étapes suivantes :
entrer les données d'image dans un transformateur de détection, DETR, le transformateur de détection ayant des paramètres déterminés selon le procédé de l'une quelconque des revendications 1 à 7 ; et
générer, avec l'au moins un processeur, au moins un signal de commande pour commander le véhicule sur la base, au moins en partie, de l'au moins un objet détecté.
